# EUROPÄISCHE PATENTANMELDUNG

(11) **EP 2 742 830 A2**
(43) Veröffentlichungstag der Anmeldung: **18.06.2014**
(21) Anmeldenummer: 13405138.2
(22) Anmeldetag: 12.12.2013
(51) Int. Cl.: A47G 19/34, G01F 13/00

(54) **Behälter mit einer Vorrichtung zur Ausgabe einer vorbestimmbaren Menge von Zucker oder Salz**

(30) Priorität: 13.12.2012 CH 27902012
(71) Anmelder: Betty Bossi Verlag AG, 8021 Zürich (CH)
(72) Erfinder: Engler, Valentin, 8037 Zürich (CH)
(74) Vertreter: Gachnang, Hans Rudolf

(57) **Zusammenfassung**

Vorbestimmte Mengen an Zucker oder Salz lassen sich mit dem erfindungsgemässen Behälter (1) exakt ausschütten, indem durch Drehen am Deckel (9) relativ zum Behälter (1) die gewünschte Menge angewählt und danach der Behälter (1) auf den Kopf gestellt und die Portion ausgegeben wird. Ebenso ist es möglich, die auszuschüttende Menge nach Gefühl vorzunehmen.

## Beschreibung

Gegenstand der Erfindung ist ein Behälter mit einer Vorrichtung zur Ausgabe einer vorbestimmbaren Menge von Zucker oder Salz gemäss Oberbegriff des Patentanspruchs 1.

Im Haushalt sind Behälter bekannt, mit denen eine Ausgabe einer ungefähren Menge an Zucker, zum Beispiel für eine Tasse Kaffee, möglich ist. Der bekannteste Dosierer oder Dispenser umfasst einen Behälter, meist kegelstumpfförmiger Gestalt, mit einem Deckel, in dem ein Rohr befestigt ist, das ausserhalb des Deckels, das heisst oben etwas den Deckel überragt und dessen grösster Teil der Länge bis annähernd an den Boden des Behälters reicht. Durch Auf-den-Kopf-Stellen des Behälters gelangt dann eine mehr oder weniger gleich bleibende Menge an Zucker durch das Rohr in die Kaffeetasse. Die auszugebende Menge wird dadurch bestimmt, in dem ein oder mehrere Male der Behälter auf den Kopf gestellt wird und so die gewünschte Menge am unteren Ende ins Rohr gelangt und abgegeben werden kann.

Aus der FR 2 298 091 ist bereits ein Messbehälter bekannt, bei dem im Bodenbereich ein drehbarer Messzylinder mit mehreren Kammern angeordnet ist. Am Mantel des Messbehälters ist ein nach innen ragender Kanal ausgebildet, der unten offen und über die gewünschte Kammer des Messzylinders führbar ist. Dazu muss der Boden mit dem Messzylinder bezüglich des Mantels des Behälters gedreht werden. In einer weiteren Ausführung endet der Kanal nicht im Mantel, sondern in einem Deckel am oberen Ende des Messbehälters. Nachteilig an diesem Messbehälter ist die Tatsache, dass dieser durch Ablösen des Messzylinders mit den Abteilen und Herausziehen aus dem Mantel des Behälters geöffnet und danach das Nachfüllen nur von unten erfolgen kann. Zudem ist die Montage des Messbehälters bei der Herstellung aufwendig, da Teile der Vorrichtung, insbesondere der Abdeckboden mittels Schrauben, die durch den Mantel hindurchgeführt werden müssen, gehalten wird.

Beim Kochen, Backen und anderen Vorgängen in der Küche werden oft in Rezepten ganz bestimmte Mengen an Salz oder Zucker vorgeschrieben, welche benötigt werden. Meist sind diese Angaben wie folgt: ¼-, ½-, ¾- oder 1/1 Teelöffel oder ¼-, ½-, ¾- oder ein ganzer Esslöffel. Folglich müssen solche Mengen mit Löffeln mehr oder weniger genau bestimmt werden. Dies ist umständlich und zudem ungenau, weil nicht alle Löffel gleiche Volumina aufweisen.

Eine Aufgabe der vorliegenden Erfindung besteht nun darin, einen Behälter mit einer Vorrichtung zu schaffen, der einerseits einen Vorrat an Zucker oder Salz oder ein anderes rieselfähiges Produkt enthält und mit dem andererseits die gewünschte Menge genau ausgegeben werden kann.

Gelöst wird diese Aufgabe durch einen Behälter gemäss den Merkmalen des Patentanspruchs 1. Vorteilhafte Ausgestaltungen des Behälters sind in den abhängigen Ansprüchen umschrieben.

Durch Drehen des Oberteils des Behälters können gewünschte Mengen angewählt und danach ausgegeben werden. Die gewünschten Mengen an rieselfähigen Produkten können entweder direkt in einer Charge oder durch mehrere Chargen kombiniert hintereinander ausgegeben werden.

Weiter ist es möglich, mit dem erfindungsgemässen Behälter auch eine bestimmte Menge nach Gefühl auszuschütten oder einer Waage zuzuführen. Durch die transparente Gestaltung des Rumpfes des Behälters ist jederzeit der Füllstand an noch vorhandenem Inhalt sichtbar.

Anhand eines illustrierten Ausführungsbeispiels wird die Erfindung nachfolgend erläutert. Es zeigen:
- Figur 1: eine perspektivische Darstellung des Behälters,
- Figur 2: eine Ansicht des Behälters von unten auf den Bodenverschluss,
- Figur 3: eine Aufsicht auf den Bodenverschluss,
- Figur 4: eine perspektivische Darstellung des Dosierkonus,
- Figur 5: eine Aufsicht auf den Dosierkonus in Figur 4,
- Figur 6: eine perspektivische Darstellung des Innern der konischen Anwahlscheibe,
- Figur 7: eine Aufsicht auf die Anwahlscheibe,
- Figur 8: eine perspektivische Darstellung des Dosierrohres mit angeformtem konischen Deckel über der Anwahlscheibe,
- Figur 9: eine Aufsicht auf das Dosierrohr,
- Figur 10: eine perspektivische Darstellung des Oberteils des Behälters,
- Figur 11: eine Aufsicht auf das Oberteil mit der Ausgussöffnung und
- Figur 12: einen Axialschnitt durch das Oberteil des Behälters.

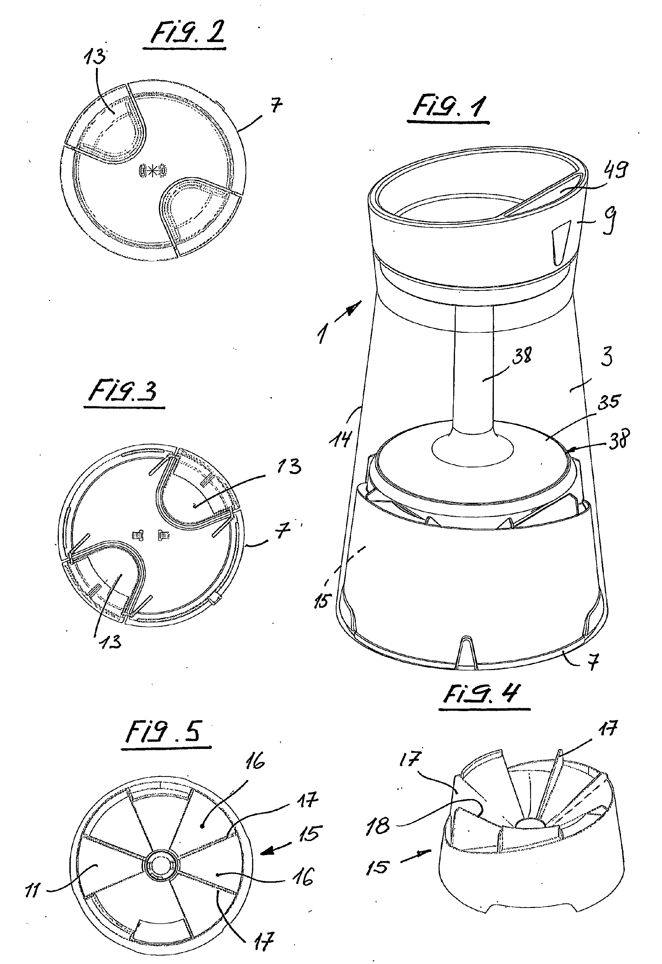

In Figur 1 ist mit Bezugszeichen 1 ein Behälter zur Ausgabe einer vorbestimmten Menge von Zucker oder Salz bezeichnet. Der Behälter 1 umfasst einen zentralen Hohlkörper von zylindrischer oder, wie in Figur 1 dargestellt, oben zylindrischer und unten kegelstumpfförmiger Gestalt. Funktionsmässig unterscheiden sich die beiden Formen des Rumpfes 3 des Behälters 1 nicht. Im unteren Ende des Rumpfes 3 ist ein Dosierkonus 15 eingesetzt. Dieser ist unten mit einer Abdeckung 7 verschlossen. Die obere Öffnung des Behälters 1 über dem zylindrischen Abschnitt 45 des Rumpfes 3 wird durch einen bezüglich des Rumpfes 3 drehbaren und in den Rumpf 3 hineinragenden Deckel 9 verschlossen. Die einzelnen Elemente, welche die Vorrichtung 1 bilden, werden zusammen mit deren Funktionen nun anhand der Figuren 2 bis 11 beschrieben bzw. erklärt.

Die Abdeckung 7 unter dem Dosierkonus 15 kann zwei schwenkbar angelenkte Griffplatten 13 umfassen, welche dazu dienen, eine Verrastung zwischen dem Rumpf 3 und dem Dosierkonus 15 zu lösen, um den Dosierkonus 15 zum Reinigen aus dem Behälter 1 herausziehen zu können.

Der Dosierkonus 15 umfasst einen konischen Mantel 14, in welchem radial verlaufende Trennwände 17, zwischen denen und über dem Boden 11 des Dosierkonus 15 unterschiedlich grosse Räume oder Silo 16 gebildet werden. Im dargestellten Beispiel weisen - im Grundriss gesehen - alle Räume 16 gleiche Grundflächen auf. Die unterschiedlichen Aufnahmefähigkeiten der Räume 16 werden dadurch erreicht, dass diese unterschiedliche Höhen aufweisen, indem deren Böden 11 auf unterschiedlichen Ebenen liegen. Dadurch wird erreicht, dass die Volumina der einzelnen Räume 16 beispielsweise dem Volumen eines gestrichen gefüllten Teelöffels oder Esslöffels entsprechen. Andere Räume 16 entsprechen beispielsweise einem halben oder einem Viertel Tee- oder Esslöffel, wenn die Räume 16 bis an die kegelförmige Unterseite eines in Kontakt mit den Oberkanten 18 der Trennwände 17 stehenden und drehbaren Dosierrohres 37 angefüllt sind. Alternativ könnten die Räume 16 bzw. die Oberkanten 18 der Trennwände 17 auch in einer Ebene liegen und durch eine flach verlaufende Unterseite am Dosierrohr 37 abgedeckt sein.

Das Dosierrohr 37 umfasst zwei fest miteinander verbundene Teile, nämlich oben ein axial verlaufendes Rohr 38 und daran anschliessend ein radial nach aussen verlaufender Rohrabschnitt 39 und unten ein kegelförmiger Fuss 35. Unter dem Fuss 35 und mit diesem verbunden ist ein kegelförmiger Einlaufteil 19 angeordnet, der mit einem Wellenstummel 40 im Dosierkonus 15 drehbar gelagert ist.

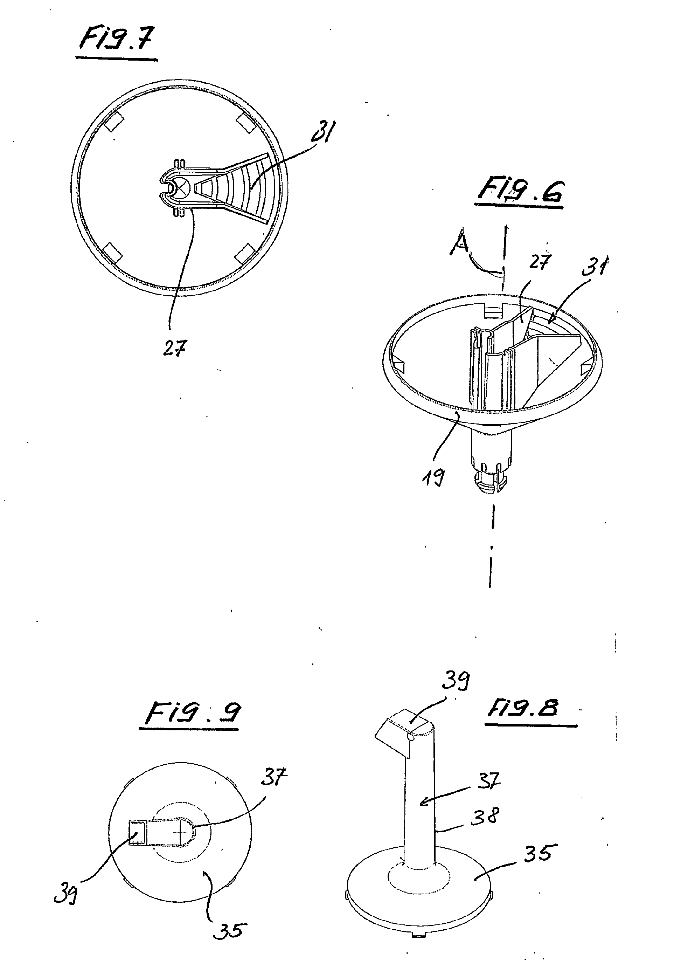

Die Abdeckung über den Trennwänden 17 wird oben durch das schirm- oder kegelförmige Einlaufteil 19 gebildet (Figuren 8 und 9). Das Einlaufteil 19 umfasst in seinem Inneren und überdeckt vom Fuss 35 eine kreissegmentförmige Öffnung 31, die seitlich durch Wände 27 begrenzt ist. Die beiden seitlichen Wände 27 sind in einem spitzen Winkel angeordnet, welcher im Wesentlichen dem Winkel zwischen jeweils zwei benachbarten Trennwänden 17 im Dosierkonus 15 entspricht bzw. etwas kleiner sein kann. Die Öffnung 31 kann durch Drehen des Dosierrohres 37 über den Silo 16 mit der gewünschten Menge Salz oder Zucker gestellt werden und auf diese Weise eine Verbindung zwischen dem angewählten Silo 16 und dem Verbindungsrohr 38 erstellen.

Das offene Ende des Rohrabschnitts 39 ist vorzugsweise - jedoch nicht notwendigerweise - schräg ausgebildet (Figuren 8 und 9). Der Rohrabschnitt 39 endet im Deckel 9, und zwar in einer durch eine u-förmig verlaufende, an der Unterseite des Deckels 9 ausgebildete Aufnahme 41. Die Aufnahme 41 dient dazu, den Rohrabschnitt 39 drehfest zu halten, damit beim Drehen des Deckels 9 auch das Dosierrohr 37 mitgedreht und über dem Dosierkonus 15 bzw. einem Silo 16 ausgerichtet werden kann.

An der Peripherie des Deckels 9 ist eine Ausgussöffnung 49 ausgebildet, welche deckelunterseitig mit dem offenen Ende des Rohrabschnitts 39 in Verbindung steht. Die Ausgussöffnung 49 endet vorzugsweise in einem axial verlaufenden Führungskanal 51 an der Peripherie des Deckels 9. Der Führungskanal 51 kanalisiert das auszuschüttende Salz oder den Zucker. Alternativ könnte das Dosierrohr 37 auch ohne Rohrabschnitt 39 direkt in der Mitte des Deckels 9 enden.

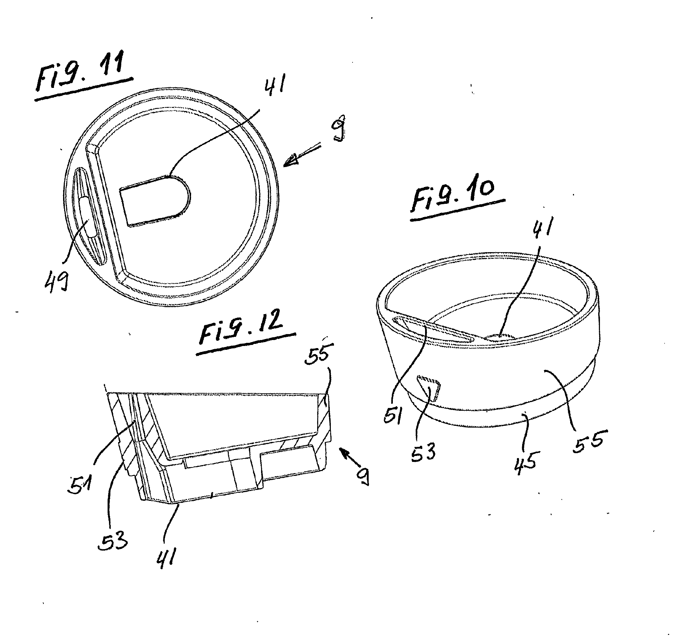

In einer bevorzugten Ausbildung des Deckels 9, wie er in den Figuren 10 und 11 dargestellt ist, weist der Deckel 9 einen nach oben ragenden Kragen 55 auf, dessen Oberkante in einem spitzen Winkel zur Symmetrieachse des Rumpfs 3 angeordnet ist. Auf der Peripherie des Kragens 55, und zwar radial ausserhalb des Führungskanals 51, ist eine Markierung 53, z.B. in Gestalt eines auf einer Ecke stehenden Dreiecks oder einer vertikalen Linie, ausgebildet oder angeformt. Die Markierung 53 dient dazu, den drehbaren Deckel 9 exakt über den gewünschten Bereich zu positionieren, unter welchem im Behälter 1 beziehungsweise in dem Raum oder Silo 16 sich die entsprechende Menge von Zucker oder Salz befindet.

Der sich zwischen der Oberseite des Fusses 35 und der Unterseite des Deckels 9 und radial ausserhalb des Rohres 38 befindliche Raum bildet den Vorratsraum für Zucker oder Salz. Zucker oder Salz können durch Abheben des Deckels 9 von oben eingefüllt werden.

Bei aufrechtstehendem Behälter 1 kann das Salz oder der Zucker über den eine konische Oberfläche aufweisenden Fuss 35 durch einen Ringspalt entlang dem Rumpf 3 nach aussen und dann nach unten in die durch die Trennwände 17 gebildeten einzelnen Silos 16 einfliessen und diese vollständig füllen.

Nach der Wahl der gewünschten Menge, indem die Markierung 53 auf der Peripherie des drehbaren Deckels 9 anhand der Angaben auf dem Rumpf 3 über dem entsprechenden Raum 16 platziert ist, kann die Vorrichtung 1 geneigt oder auf den Kopf gestellt werden. Durch diese Massnahme ergiesst sich zum Beispiel Zucker, der sich im angewählten Silo 16 befindet, durch die Öffnung 31 hindurch in das Rohr 37, welches im Zentrum des Fusses 35 angeordnet ist, ins Rohr 38 und dann in den Rohrabschnitt 39, der in Verbindung mit der Ausgussöffnung 49 steht. Das Salz oder der Zucker, die sich in einem der nicht angewählten Silo 16 befinden, bleiben dort, weil diese Silo 16 durch die Abdeckung 7 verschlossen sind.

Damit sicher kein Salz oder Zucker direkt aus dem Raum unter dem Deckel 9 in die Ausgussöffnung 49 gelangen kann, ist am Rumpf 3 ein nach innen ragender Flansch 47 (nicht sichtbar) ausgebildet, der nur an einer einzigen Stelle unterbrochen ist. Wird nämlich die Markierung 53 über die unterbrochene Stelle im nicht sichtbaren Flansch geführt, so kann die Benutzerin oder der Benutzer des Behälters 1 eine beliebige nicht abgemessene Menge direkt aus dem Speicherraum ausfliessen lassen. Durch die Verwendung eines transparenten Materials für den Rumpf 3 oder eines farblosen oder eines farbigen Sichtfensters im Rumpf kann der momentane Füllstand festgestellt werden.

Der erfindungsgemässe Behälter 1 ermöglicht sowohl das dosierte Ausschütten von vorbestimmbaren Mengen als auch einer nach Gefühl bestimmten Menge.

### Legende der Bezugszeichen

- 1: Behälter
- 3: Rumpf
- 7: Abdeckung
- 9: Deckel
- 11: Boden
- 13: Griffplatten
- 14: Mantel
- 15: Dosierkonus
- 16: Raum/Silo
- 17: Trennwände
- 18: Oberkante von 17
- 19: Einlaufteil
- 31: Öffnung
- 35: Fuss
- 37: Dosierrohr
- 38: Verbindungsrohr
- 39: Rohrabschnitt
- 40: Wellenstummel
- 41: Aufnahme
- 45: Abschnitt
- 47: Flansch
- 49: Ausgussöffnung
- 51: Führungskanal
- 53: Markierung
- 55: Kragen

## Patentansprüche

1. Behälter mit einer Vorrichtung zur Ausgabe einer vorbestimmten Menge von Zucker oder Salz, umfassend einen Dosierkonus (16) mit mehreren oben offenen durch Trennwände (17) voneinander getrennte Silo (16) unterschiedlichen Inhalts, einen Deckel (9) mit einer Ausgussöffnung (49) sowie einen den Dosierkonus (15) und den Deckel (9) verbindenden Rumpf (3),
**dadurch gekennzeichnet,**
**dass** über den oben offenen Silo (16) ein um eine Symmetrieachse A drehbar ausgebildeter Einlaufteil (19) angeordnet ist,
**dass** am Einlaufteil (19) eine Öffnung (31) ausgebildet ist, welche über jeweils einem Silo (16) positionierbar ist,
**dass** auf dem Einlaufteil (19) ein kegelförmiger Fuss (35) aufliegt und mit dem Einlaufteil (19) in Drehrichtung wirkverbunden ist,
**dass** auf dem kegelförmigen Fuss (35) ein in der Symmetrieachse A angeordnetes Dosierrohr (37) aufgesetzt ist, das oben einen Rohrabschnitt (39) umfasst, in einer Aufnahme (41) im Deckel (9) endet und dort drehfest gehalten ist und
**dass** die Öffnung am oberen Rohrabschnitt (39) in eine an der Peripherie des Deckels (9) ausgebildete Ausgussöffnung (49) mündet.

2. Behälter nach Anspruch 1, **dadurch gekennzeichnet, dass** der Fuss (35), der oben als kegelförmiger Schirm ausgebildet ist, das Schüttgut nach aussen zum Rumpf (3) hin auslenkt und in einem Ringspalt zwischen dem Rumpf (3) und dem Fuss (35) zu den Silo (16) leitet.

3. Behälter nach einem der Ansprüche 1 und 2, **dadurch gekennzeichnet, dass** die Silo (16) um die Symmetrieachse A des Dosierkonus (15) angeordnet sind und kreisausschnittförmige Grundrisse aufweisen, wobei deren Aufnahmekapazitäten entweder durch unterschiedlich grosse Querschnittsflächen oder durch unterschiedlich grosse Höhen bestimmt sind.

4. Behälter nach einem der Ansprüche 1 bis 3, **dadurch gekennzeichnet, dass** im Raum unterhalb des Deckels (9) ein vom Rumpf (3) nach innen ragender Flansch (47) angeordnet ist, auf dem der Deckel (9) axial aufliegt und an einer Stelle eine Öffnung aufweist, welche den direkten Durchtritt von Schüttgut aus dem Raum oberhalb des Fusses (35) in die Ausgussöffnung (49) ohne Mengenbeschränkung zulässt.
